# EUROPÄISCHE PATENTANMELDUNG

(11) **EP 0 925 868 A2**
(43) Veröffentlichungstag der Anmeldung: **30.06.1999**
(21) Anmeldenummer: 98890359.7
(22) Anmeldetag: 03.12.1998
(51) Int. Cl.: B23P 19/00, B23P 19/04, B29C 65/20, B21D 53/74, E06B 3/06

(54) **Vorrichtung zur Herstellung von Fensterrahmen**

(30) Priorität: 22.12.1997 AT 80797 U
(71) Anmelder: Technoplast Kunststofftechnik Gesellschaft m.b.H., 4563 Micheldorf (AT)
(72) Erfinder: Schwaiger, Meinhard, Dipl.-Ing, 4020 Linz (AT); Mock, Karl, 4451 St. Ulrich/Steyr (AT)
(74) Vertreter: Babeluk, Michael, Dipl.-Ing. Mag., Patentanwälte Babeluk - Krause

(57) **Zusammenfassung**

Die vorliegende Erfindung betrifft eine Vorrichtung zur Herstellung von Fensterrahmen aus Profilabschnitten mit einer Verbindungseinrichtung(13, 16a, 16b), in der die Profilabschnitte zu Fensterrahmen (3a, 3b) verbunden werden, und mit einer Fördereinrichtung (18, 20, 23, 25, 27, 29, 31, 34, 37, 39) zur Zufuhr der Profilabschnitte zur Verbindungseinrichtung (13, 16a, 16b). Eine weitgehend automatisierte Produktion wird dadurch erreicht, daß die Verbindungseinrichtung (13, 16a, 16b) mit einer Einlegeeinrichtung (12, 15a, 15b) in Verbindung steht, der mindestens eine Dreheinrichtung (21, 24, 28, 32, 33, 36) vorgelagert ist, um die Profilabschnitte in die entsprechende Position zu drehen, und daß die Einlegeeinrichtung (12, 15a, 15b) dazu ausgebildet ist die Profilabschnitte in einer Konfiguration, die dem fertigen Fensterrahmen entspricht, in eine Einlegeposition auf der Verbindungseinrichtung (13, 16a, 16b) zu transportieren.

## Beschreibung

Die vorliegende Erfindung betrifft eine Vorrichtung zur Herstellung von Fensterrahmen aus Profilabschnitten, mit einer Verbindungseinrichtung, in der die Profilabschnitte zu Fensterrahmen verbunden werden, und mit einer Fördereinrichtung zur Zufuhr der Profilabschnitte zur Verbindungseinrichtung.

Fensterrahmen werden größtenteils automatisiert aus entsprechenden Profilen hergestellt. Im Sinne der vorliegenden Erfindung bedeutet der Ausdruck Fensterrahmen sowohl den im allgemeinen beweglich ausgeführten Bauteil, der die Fensterscheibe trägt, um einen Fensterflügel zu bilden, als auch den im Gebäude fest angeordneten Bauteil, in dem ein oder mehrere Fensterflügel angeordnet sind. In dem Fall von Kunststoffenstern ist die Verbindungseinrichtung als Schweißmaschine ausgeführt, die die auf Gehrung geschnittenen Enden der Profilabschnitte zunächst erwärmt und dann aufeinander drückt, um eine feste Verbindung zu erreichen. Metallfenster können so hergestellt werden, daß ein entsprechender Verbindungsteil aus Kunststoff oder dgl. in die Hohlräume der Metallprofile an den auf Gehrung geschnittenen Enden eingeführt wird, worauf ein vorbestimmter Bereich des Metallprofils durch einen Stempel plastisch verformt wird, um eine sichere Verbindung der Metallprofilabschnitte mit den Halteteilen zu gewährleisten.

Das Einlegen der Profilabschnitte in die entsprechende Verbindungseinrichtung erfolgt im allgemeinen händisch. Dabei werden die zusammengehörigen Profilabschnitte in die Nähe der Verbindungseinrichtung gefördert, worauf eine Bedienungsperson den Einlegevorgang durchführt. In Folge des hohen Personalbedarfs ist diese Vorgangsweise teuer und wenig effizient. Alternativ dazu ist es möglich, das Einlegen der Profilabschnitte in die Verbindungseinrichtung maschinell auszuführen, und zwar durch einen Knickarmroboter. Die Taktzeit von modernen Verbindungseinrichtungen ist jedoch so kurz, daß es in der zur Verfügung stehenden Zeit für einen solchen Roboter nicht möglich ist, vier Profilabschnitte einzulegen. Daher wird der Roboter ein kapazitätsbegrenzender Bauteil.

Aus der DE 37 21 861 A ist ein Verfahren und eine Vorrichtung zur Herstellung eines rechteckigen Rahmens, insbesondere eines Fensterrahmens, bekannt. Bei diesem Verfahren werden die zugeschnittenen Kunststoffprofilstücke jeweils für einen Rahmen in einem Zwischenspeicher abgelegt, um von dort einzeln von einem in drei Ebenen verfahrbaren Greifer entnommen zu werden und in die Schweißmaschine nacheinander eingelegt zu werden. Dabei entspricht die Dauer des Einlegevorganges größenordnungsmäßig der des eigentlichen Schweißvorganges, d. h. die Schweißmaschine wird in einem solchen Fall nur mit der Hälfte ihrer theoretisch möglichen Kapazität ausgenützt.

Aus der DE 38 31 471 A ist ein Verfahren zur Herstellung von Kunststoffenstern bekannt, bei dem eine Kapazitätssteigerung dadurch erreicht wird, daß ein Blendrahmenprofil und ein Flügelprofil gleichzeitig aus einem Werkzeug extrudiert, geschnitten und dann verschweißt werden. Das Problem des Einlegens in die Schweißmaschine ist jedoch auch bei diesem bekannten Verfahren nicht gelöst.

Auch aus der DE 23 54 233 ist eine Anordnung zum Herstellen von Eckverbindungen an Fenster- und Türrahmen bekannt. Dabei werden die Eckverbindungen im wesentlichen auf einem Montagetisch durchgeführt. Das Problem eines effizienten Einlegens der Profilabschnitte ist auch hier nicht angesprochen.

Aufgabe der vorliegenden Erfindung ist es, die oben beschriebene Vorrichtung so weiterzubilden, daß mit geringstmöglichem Aufwand eine Leistungssteigerung erzielt werden kann.

Erfindungsgemäß wird diese Aufgabe dadurch gelöst, daß die Verbindungseinrichtung mit einer Einlegeeinrichtung in Verbindung steht, der mindestens eine Dreheinrichtung vorgelagert ist, um die Profilabschnitte in die entsprechende Position zu drehen, und daß die Einlegeeinrichtung dazu ausgebildet ist, die Profilabschnitte in einer Konfiguration, die dem fertigen Fensterrahmen entspricht, in eine Einlegeposition auf die Verbindungseinrichtung zu transportieren.

Wesentlich an der vorliegenden Erfindung ist, daß die Profilabschnitte, die alle in der gleichen Orientierung angefördert werden, von der Einlegeeinrichtung in die jeweils notwendige Position gedreht werden. Als Dreheinrichtung wird im Sinne der Erfindung dabei allgemein ein Bauelement verstanden, das den jeweiligen Profilabschnitt ergreifen und entsprechend verdrehen kann. Erfindungsgemäß werden die einzelnen Profilstücke bereits vor dem Einlegen in eine Lage gebracht, die grundsätzlich dem fertigen Rahmen entspricht. Je nach dem verwendeten Verbindungsverfahren können dabei jedoch noch Abstände zwischen den zu verbindenden Abschnitten vorliegen. Wird beispielsweise die Verbindung durch eine Vierkopf-Schweißmaschine durchgeführt, so liegen die auf Gehrung geschnittenen Flächen beim Einlegen in einem Abstand vor, der das Einführen eines Schweißspiegels ermöglicht.

Die vorliegende Erfindung ist auf verschiedene Typen von Fenstern anwendbar. Bei der Herstellung von Kunststoffenstern erfolgt das Verbinden der Profilabschnitte in an sich bekannter Weise durch Verschweißen, bei Aluminiumprofilen wird allgemein ein Verpreßvorgang eingesetzt. Bei Verbundprofilen mit Holzanteilen kann zusätzlich noch eine Verleimung oder Vemagelung durchgeführt werden.

Eine weitere Steigerung der Taktzeit kann dadurch erreicht werden, daß die Einlegeeinrichtung zwei unabhängig voneinander betreibbare Dreheinrichtungen aufweist. Dabei ist es besonders günstig, wenn eine Dreheinrichtung zur Drehung eines Profilabschnitts um 180° ausgebildet ist, während die andere Dreheinrichtung zur Verdrehung von Profilabschnitten um 90° in eine Richtung im Uhrzeigersinn und in einer Richtung gegen den Uhrzeigersinn ausgebildet ist. Bei einer solchen Ausführungsvariante wird sinnvollerweise die Herstellung der Profilabschnitte so programmiert, daß abwechselnd horizontale und vertikale Profilabschnitte zu der Verbindungseinrichtung transportiert werden. Auf diese Weise wird die Dreheinrichtung zur Verdrehung um 180° nur bei jedem vierten Profilabschnitt eingesetzt, während die andere Dreheinrichtung zur Verdrehung um 90° bei jedem zweiten Profilabschnitt in Aktion tritt. Auf diese Weise wird sichergestellt, daß die Arbeitsgeschwindigkeit der Dreheinrichtunge kein begrenzender Faktor für die Kapazität der Anlage ist.

In einer besonders bevorzugten Ausführungsvariante der Erfindung ist vorgesehen, daß mehrere Zufuhreinrichtungen vorgesehen sind, die jeweils eine oder mehrere Verbindungseinrichtungen mit Profilabschnitten versorgen. Auf diese Weise können Taktzeiten und Produktionskapazitäten der Extrusionslinien in optimaler Weise so aufeinander abgestimmt werden, daß ein maximaler Durchsatz erzielt wird.

In der Folge wird die Erfindung anhand der in den Figuren dargestellten Ausführungsbeispiele näher erläutert. Es zeigen:
- Fig. 1: eine Übersicht über eine Produktionslinie zur Herstellung von Fenstern mit erfindungsgemäßen Vorrichtungen,
- Fig. 2: ein Detail von Fig. 1 in vergrößertem Maßstab und
- Fig. 3: ein weiteres Detail von Fig. 1 in vergrößertem Maßstab.

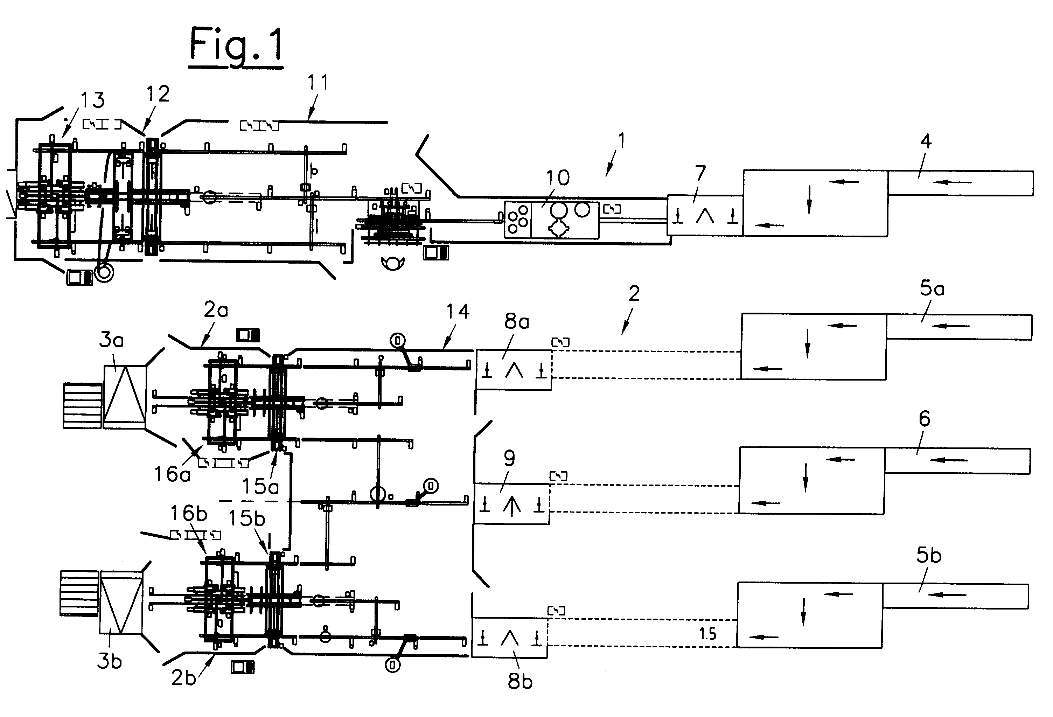

Die Produktionsanlage der Fig. 1 ist zur Herstellung von zweiflügeligen Fenstern vorgesehen. Die erste Produktionslinie 1 dient zur Herstellung der gebäudefesten Rahmen, während die Produktionslinie 2, die sich an ihrem Ende in Linien 2a und 2b aufteilt, zur Herstellung der Fensterflügel 3a, 3b vorgesehen ist.

In einer nicht dargestellten Extrusionslinie, wie sie an sich bekannt ist, werden Profilstangen für die herzustellenden Rahmen bzw. Fenster produziert. Eine Fördereinrichtung 4 für die Rahmen 5a, 5b bzw. 6 für die Flügel 3a, 3b transportiert die Stangen zu den Gehrungssägen 7, 8a, 8b bzw. 9. Die Fensterflügel 3a, 3b sind so aufgebaut, daß sie jeweils aus drei schmalen Profilabschnitten und einem breiten Profilabschnitt bestehen. Die Fördereinrichtung 6 mit der Gehrungssäge 9 dient zur Anlieferung der breiten Profilabschnitte für beide Flügel 3a, 3b. Die Fördereinrichtung 5a mit der Gehrungssäge 8a dient zur Anlieferung und Produktion der Profilabschnitte für den ersten Fensterflügel 3a, während die Fördereinrichtung 5b mit der Gehrungssäge 8b zur Anlieferung und Herstellung der schmalen Profilabschnitte für den zweiten Fensterflügel 3b dient. Eine Bearbeitungsstation 10 in der ersten Produktionslinie 1 dient zur Herstellung der erforderlichen Bohrungen, Nuten und dergleichen.

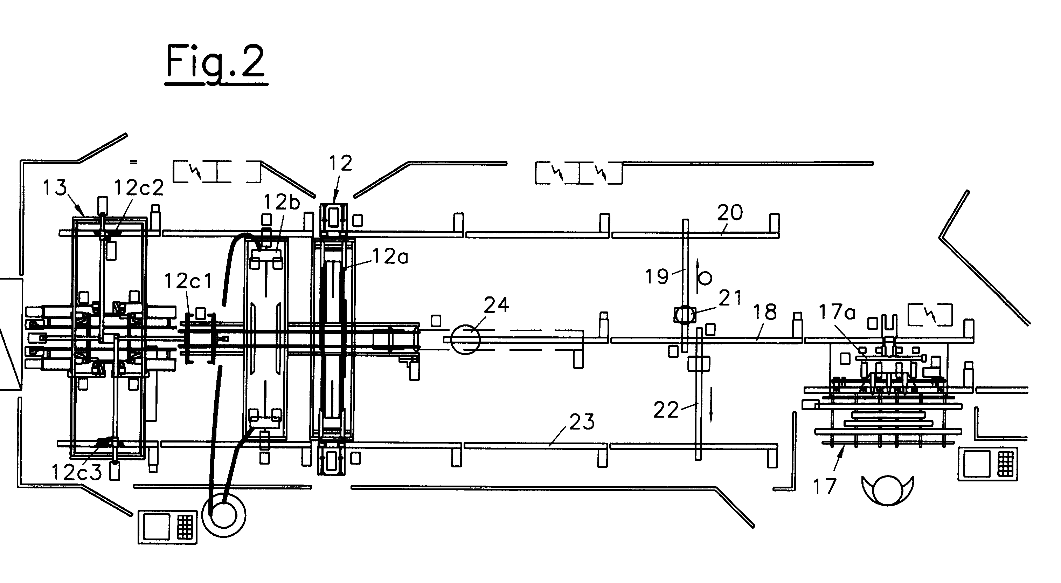

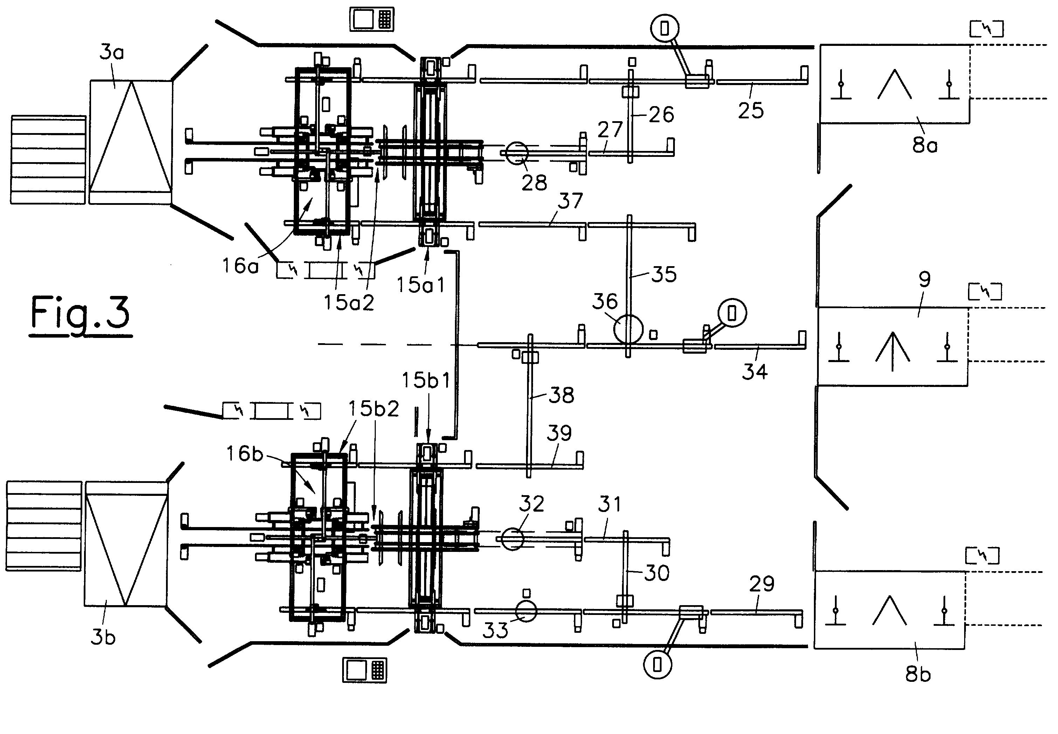

In der Produktionslinie 1 erfolgt die eigentliche Herstellung der Rahmen in einem Abschnitt, der eine Fördereinrichtung 11, eine Einlegeeinrichtung 12, die um zusätzliche Montageeinrichtungen erweitert sein kann, wie z.B. zum zusätzlichen Montieren von z.B. Eckverbindern 12a, eine zusätzliche Einrichtung 12b zum Auftragen von Dichtungsmedien oder Klebstoffen (bei z.B. Holzverbundfenstern), bestehend aus den Komponenten 12cl, zum Einlegen des querliegenden Stabpaares, sowie 12c2 und 12c3, zum Einlegen der längsliegenden Stäbe, und die als Verpreßvorrichtung ausgebildete Verbindungseinrichtung 13 aufweist. Dieser Abschnitt der Produktionslinie 1 ist in der Fig. 2 in vergrößertem Maßstab dargestellt und wird anhand dieser Figur detailliert erklärt werden. Die Produktionslinie 2 besitzt eine gemeinsame Fördereinrichtung 14, die von den Gehrungssägen 8a, 8b und 9 mit Profilabschnitten versorgt wird. Die Einlegeeinrichtungen 15a, 15b (bestehend aus den Montageeinrichtungen 15a1, 15b1 für z.B. Eckverbinder und den eigentlichen Einlegeeinrichtungen 15a2, 15bs) und die Verbindungseinrichtungen 16a, 16b der Produktionslinien 2a, 2b für die Herstellung der Fensterflügel 3a, 3b sind jeweils getrennt ausgeführt. Dieser Abschnitt der Produktionslinie 2 ist in der Fig. 3 in vergrößertem Maßstab detailliert dargestellt und wird im Zusammenhang mit dieser Figur ausführlich erklärt werden.

In der Fig. 2 ist ein Teil der Produktionslinie 1 vergrößert dargestellt. Ein Pufferspeicher 17 ist vorgesehen, um eine Verschnittoptimierung durchführen zu können. Es ist nämlich für den Ablauf der Rahmen- oder Flügelherstellung wesentlich, daß die einzelnen Profilabschnitte in einer genau festgelegten Reihenfolge angeliefert werden. Wenn diese Profilabschnitte aus 6-Meter-Stangen zugeschnitten werden, ist somit keine Verschnittoptimierung möglich. Durch die Verwendung eines Pufferspeichers können aus den 6-Meter-Stangen Profilabschnitte unter Minimierung des Verschnitts hergestellt werden, wobei im Pufferspeicher 17 eine Umsortierung so erfolgt, daß nachfolgend die richtige Reihenfolge wieder hergestellt wird. Die Sortiereinrichtung kann um eine zusätzliche Einrichtung 17a erweitert werden, um z.B. am Einzelstab Montagevorgänge auszuführen (wie z.B. bei Holz-Al-Verbundfenstern die automatisierte Al-Holzverbindung, bei PVC-Fenstern den automatisierten Armierungsprofileinschub und die Armierungsprofilverschraubung). Die Profilabschnitte werden auf einen mittleren Förderweg 18 aufgelegt und in der Fig. 2 getaktet nach links bewegt. Ein erster Querförderer 19 übernimmt jeden vierten Profilabschnitt, um ihn auf einen zweiten Förderweg 20, der parallel zum ersten Förderweg 18 ist, zu legen. Der Querförderer 19 ist mit einer Dreheinrichtung 21 ausgestattet, die den jeweiligen Profilabschnitt um 180° dreht. Auf diese Weise liegen die einzelnen Profilabschnitte am zweiten Förderweg 20 bereits in der richtigen Orientierung, um den oberen Teil des Rahmens zu bilden. Ein weiterer Querförderer 22 entnimmt Profilabschnitte, um sie auf einen weiteren Förderweg 23 zu legen, der ebenfalls parallel zu dem Förderweg 18 ist. Am Förderweg 18 ist stromabwärts der Querförderer 19 und 22 eine weitere Dreheinrichtung 24 vorgesehen, die die Profilabschnitte auf diesem Förderweg 18 abwechselnd um 90° im Uhrzeigersinn bzw. gegen den Uhrzeigersinn dreht. In der Einlegeeinrichtung 12, in die die Profile aus den Förderwegen 18, 20 und 23 übergeben werden, liegen somit sämtliche Profilabschnitte bereits in der richtigen Orientierung vor. Mit der Einlegeeinrichtung 12c werden die vier Profilabschnitte lagerichtig, in einem Arbeitsgang, gleichzeitig in die Verbindungseinrichtung 13 eingelegt. In dieser Verbindungseinrichtung 13, die für Aluminiumprofile ausgebildet ist, werden in den Enden der Profilabschnitte Eckverbinder eingefügt, die die Verbindungselemente bilden. Die Aluminiumprofile werden in der Verbindungseinrichtung 13 verquetscht, um dadurch eine stabile und dauerhafte Verbindung zu ergeben. Eine solche Verbindungseinrichtung ist grundsätzlich bekannt.

In analoger Weise können Kunststoffprofile behandelt werden, wobei die Verbindung an den auf Gehrung geschnittenen Ecken durch Verschweißen erfolgt.

Die vorliegende Maschine wird von einer elektronischen Steuerungseinrichtung so gesteuert, das jeweils der erste, fünfte, neunte usw. Profilabschnitt in einer Reihe vom Querförderer 19 unter Drehung von 180° auf den zweiten Förderweg 20 gelegt wird. Der dritte, siebente, elfte usw. Profilabschnitt wird vom zweiten Querförderer 22 auf den weiteren Förderweg 23 gelegt. Der zweite, sechste, zehnte usw. Profilabschnitt verbleibt am ersten Förderweg 18 und wird von der zweiten Dreheinrichtung 24 um 90° im Uhrzeigersinn gedreht. Der vierte, achte, zwölfte usw. Profilabschnitt verbleibt ebenfalls auf dem ersten Förderweg 18 und wird von der zweiten Dreheinrichtung 24 um 90° gegen den Uhrzeigersinn gedreht. Auf diese Weise ist es möglich, hohe Produktionsgeschwindigkeiten und kurze Taktzeiten zu erzielen.

Aus der Fig. 3 ist ersichtlich, daß die Gehrungssäge 8a den oberen, den linken und den rechten Profilabschnitt für den Fensterflügel 3a herstellt. Die Gehrungssäge 8b stellt den unteren, den linken und den rechten Profilabschnitt für den Fensterflügel 3b her. Die Säge 9 ist als kombinierte Gehrungssäge und Kappsäge ausgeführt, um für beide Fensterflügel 3a und 3b den entsprechenden breiten Profilabschnitt herzustellen. Für die Herstellung des ersten Fensterflügels 3a ist ein erster Förderweg 25 vorgesehen, von dem ein Querförderer 26 Profilabschnitte entnimmt, um diese auf einem zweiten Förderweg 27 zu legen. Eine erste Dreheinrichtung 28 dreht die entsprechenden Profilabschnitte jeweils um 90° im Uhrzeigersinn bzw. gegen den Uhrzeigersinn. Analog dazu ist für den zweiten Fensterflügel 3b ein erster Förderweg 29 vorgesehen, von dem ein Querförderer 30 Profilabschnitte entnimmt, um sie auf einen weiteren Förderweg 31 zu legen, der seinerseits mit einer Dreheinrichtung 32 ausgestattet ist. Zusätzlich ist jedoch der Förderweg 29 stromabwärts des Querförderers 30 mit einer weiteren Dreheinrichtung 33 versehen, um die Profilabschnitte um 180° zu drehen. Die breiten Profilabschnitte werden auf einem Förderweg 34 angeliefert. Ein Querförderer 35, der mit einer Dreheinrichtung 36 ausgestattet ist, legt die Profilabschnitte auf einen Förderweg 37 für den ersten Fensterflügel 3a. Stromabwärts davon ist ein Querförderer 38 vorgesehen, um die Profilabschnitte unter Beibehaltung ihrer Orientierung auf einen Förderweg 39 für den zweiten Fensterflügel 3b aufzulegen. In den Einlegeeinrichtungen 15a, 15b liegen die Profilabschnitte somit bereits in der richtigen Orientierung vor. In den Verbindungseinrichtungen 16a, 16b erfolgt die endgültige Herstellung der Fensterflügel 3a, 3b so wie dies oben beschrieben worden ist.

Der Aufbau der Vorrichtungen dieser Weise ermöglicht eine Produktion von Fenstern und Fensterrahmen mit äußerst kurzen Taktzeiten und weitgehender Automatisierung. Insbesonders können arbeitsaufwändige händische Einlegevorgänge vermieden werden.

## Patentansprüche

1. Vorrichtung zur Herstellung von Fensterrahmen aus Profilabschnitten mit einer Verbindungseinrichtung (13, 16a, 16b), in der die Profilabschnitte zu Fensterrahmen (3a, 3b) verbunden werden, und mit einer Fördereinrichtung (18, 20, 23, 25, 27, 29, 31, 34, 37, 39) zur Zufuhr der Profilabschnitte zur Verbindungseinrichtung (13, 16a, 16b), **dadurch gekennzeichnet**, daß die Verbindungseinrichtung (13, 16a, 16b) mit einer Einlegeeinrichtung (12, 15a, 15b) in Verbindung steht, der mindestens eine Dreheinrichtung (21, 24, 28, 32, 33, 36) vorgelagert ist, um die Profilabschnitte in die entsprechende Position zu drehen, und daß die Einlegeeinrichtung (12, 15a, 15b) dazu ausgebildet ist, die Profilabschnitte in einer Konfiguration, die dem fertigen Fensterrahmen entspricht, in eine Einlegeposition auf die Verbindungseinrichtung (13, 16a, 16b) zu transportieren.

2. Vorrichtung nach Anspruch 1, **dadurch gekennzeichnet**, daß die Verbindungseinrichtung (13, 16a, 16b) als Schweißmaschine zur Verbindung von auf Gehrung geschnittenen Kunststoffprofilen ausgebildet ist.

3. Vorrichtung nach Anspruch 1, **dadurch gekennzeichnet**, daß die Verbindungseinrichtung (13, 16a, 16b) als Verpreßvorrichtung zur Verbindung von Aluminiumprofilen ausgebildet ist.

4. Vorrichtung nach einem der Ansprüche 1 bis 3, **dadurch gekennzeichnet**, daß der Einlegeeinrichtung (12, 15a, 15b) zwei unabhängig voneinander betreibbare Dreheinrichtungen (21, 24; 28, 36; 32, 33) vorgeschaltet sind.

5. Vorrichtung nach Anspruch 4, **dadurch gekennzeichnet**, daß eine Dreheinrichtung (21, 33, 36) zur Drehung eines Profilabschnitts um 180° ausgebildet ist, während die andere Dreheinrichtung (24, 28, 32) zur Verdrehung von Profilabschnitten um 90° in einer Richtung im Uhrzeigersinn und in einer Richtung gegen den Uhrzeigersinn ausgebildet ist.

6. Vorrichtung nach einem der Ansprüche 1 bis 5, **dadurch gekennzeichnet**, daß die Einlegeeinrichtung (12, 15a, 15b) ein Mittel zur seitlichen Verschiebung der Profilabschnitte aufweist und die vier Profilabschnitte gleichzeitig einlegt.

7. Vorrichtung nach einem der Ansprüche 1 bis 6, **dadurch gekennzeichnet**, daß das Einlegen der neuen Profile im wesentlichen gleichzeitig mit dem Austransport des zuvor gebildeten Rahmens erfolgt.

8. Vorrichtung nach einem der Ansprüche 1 bis 7, **dadurch gekennzeichnet**, daß die Arbeitsebene der Verbindungseinrichtung im wesentlichen horizontal ist.

9. Vorrichtung nach einem der Ansprüche 1 bis 8, **dadurch gekennzeichnet**, daß die Drehung der Profilabschnitte in einer Ebene erfolgt, die parallel zur Arbeitsebene der Verbindungseinrichtung (13, 16a, 16b) ist.

10. Vorrichtung nach einem der Ansprüche 1 bis 9, **dadurch gekennzeichnet**, daß mehrere Zufuhreinrichtungen (4, 5a, 5b, 6) vorgesehen sind, die jeweils eine oder mehrere Verbindungseinrichtungen (13, 16a, 16b) mit Profilabschnitten versorgen.
